(19) Europäisches Patentamt

European Patent Office

Office européen des brevets

(11) Veröffentlichungsnummer: **0 290 626**
**A1**

(12) **EUROPÄISCHE PATENTANMELDUNG**
Veröffentlicht nach Art. 158 Abs. 3 EPÜ

(21) Anmeldenummer: 87908017.4

(22) Anmeldetag: 05.11.87

Daten der zugrundeliegenden internationalen Anmeldung:

(86) Internationale Anmeldenummer:
PCT/SU87/00123

(87) Internationale Veröffentlichungsnummer:
WO88/03557 (19.05.88 88/11)

(51) Int. Cl.³: **C 12 G 1/06**

(30) Priorität: 14.11.86 SU 4146074
14.07.87 SU 4268009

(43) Veröffentlichungstag der Anmeldung:
17.11.88 Patentblatt 88/46

(84) Benannte Vertragsstaaten:
DE FR GB IT

(71) Anmelder: NAUCHNO-PROIZVODSTVENNOE
OBIEDINENIE NAPITKOV I MINERALNYKH VOD
ul. Rossolimo, 7
Moscow, 119021(SU)

(71) Anmelder: VSESOJUZNY ZAOCHNY INSTITUT
PISCHEVOI PROMYSHLENNOSTI
ul. Chkalova, 73
Moscow, 109803(SU)

(72) Erfinder: SARISHVILI, Naskid Grigorievich
ul. Khalturinskaya, 11-231
Moscow, 107392(SU)

(72) Erfinder: STORCHEVOI, Evgeny Nikolaevich
Nakhimovsky pr., 9-1-58
Moscow, 113149(SU)

(72) Erfinder: VAGANOV, Vyacheslav Mikhailovich
ul. Scherbakovskaya, 50/52-6
Moscow, 105187(SU)

(72) Erfinder: REITBLAT, Bella Borisovna
alleya Zhemchugovoi, 3-1-85
Moscow, 111402(SU)

(74) Vertreter: von Füner, Alexander, Dr. et al,
Patentanwälte v. Füner, Ebbinghaus, Finck Mariahilfplatz
2 & 3
D-8000 München 90(DE)

(54) **VERFAHREN ZUR HERSTELLUNG VON SCHAUMWEIN.**

(57) Die Erfindung bezieht sich auf die Technologie der Herstellung von Getränken.

Das erfindungsgemäße Verfahren zur Herstellung von Schaumwein erfolgt in einem kontinuierlichen Strom mittels Entgasung des Verschnitts aus weißen Weinmaterialien in Gegenwart von Hefen, die an einem Sorptionsmittel immobilisiert wurden. Der entgaste Verschnitt der weißen Weinmaterialien beziehungsweise der Verschnitt der roten Weinmaterialien wird im Gemisch mit Likör in die Zone der Champagnisierung, die eine Sorptionsschicht aufweist, unter diese Sorptionsschicht eingeführt. Die für die Durchführung der sekundären Gärung in der Zone der Champagnisierung und der Anreicherung des champagnisierbaren Weins mit biologisch aktiven Stoffen erforderlichen Hefe setzt man der Adaptation an die Bedingungen der Champagnisierung aus. Hierfür werden die Hefe in der Zone der Champagnisierung untergebracht, in der sie eine gewisse Zeit unter den Bedingungen der Isolation von dem zu champagnisierenden Wein gehalten werden. Nach der Beendigung der Adaptation werden die Hefe mit Likör vermischt und unter die Schicht des Sorptionsmittels zwecks Durchführung der Champagnisierung eingeführt, unter die gleiche Schicht tritt auch das Gemisch des Verschnitts mit Likör ein.

Der champagnisierte Schaumwein wird nach der Champagnisierung abgekühlt, gefiltert und zur Abfüllung geleitet.

TPAA-35622.3     0290626

VERFAHREN ZUR HERSTELLUNG VON
SCHAUMWEIN

## Gebiet der Technik

Die vorliegende Erfindung bezieht sich auf die Technologie der Produktion von Getränken, insbesondere auf die Technologie der Weinbereitung, und betrifft konkret ein Verfahren zur Herstellung von Schaumwein.

## Vorhergehender Stand der Technik

Bekannt ist ein Verfahren zur Herstellung von weißem und rotem Schaumwein in einem kontinuierlichen Strom, bei dem man die Entgasung des Verschnitts aus weißen Weinmaterialien in Gegenwart von an einem Soprtionsmittel immobilisierten Hefen vornimmt. Dann bereitet man eine Gärungsmischung aus dem Verschnitt aus weißen und roten Weinmaterialien, aus Tanklikör und Hefen, wobei der Gehalt an Hefezellen in der Gärungsmischung in einer Menge von 3 bis 5 Mio/ml gewährleistet wird. Die hergestellte Gärungsmischung wird in einem kontinuierlichen Strom der Zone der Champagnisierung zugeführt, die eine Schicht aus einem Sorptionsmittel enthält, an dem die Hefezellen kontinuierlich haftenbleiben. In der Zone der Champagnisierung erfolgt die sekundäre Gärung und die Anreicherung des Weins mit biologisch aktiven Stoffen der Autolyse der Hefen. Der aus der Zone der Champagnisierung eintretende Schaumwein wird der Kühlung, Filtration und Abfüllung ausgesetzt (SU,A, 5822279).

Gemäß dem bekannten Verfahren werden in die Gärungsmischung, die in die Champagnisierungszone eintritt, junge Hefe nach ihrer aeroben Kultivierung eingeführt. Dabei weisen die Hefe ein Gäraktivität auf, die für eine effektive Wirkung unter den Bedingungen der Champagnisierung unzureichend ist. Außerdem wird die für die sekundäre Gärung erforderliche Menge an Likör in die Gärungsmischung in einem Strom vor der Champagnisierung aufgegeben. Unter diesen Bedingungen verlangsamt sich die Umstellung der Hefe auf den anaeroben Typ der Lebenstätigkeit.

Das führt zur Abschwächung der biosynthetischen Funktionen der Hefe, zur unvollständigen Vergärung von Zucker in der Stufe der sekundären Gärung und als Folge zur Verlängerung der Dauer der sekundären Gärung und zur Reduzierung der Stufe der Anreicherung von Wein mit biologisch aktiven Stoffen, in der sich hohe organische Kennziffern von Schaumwein herausbilden. Bei der Herstellung von Schaumwein im bekannten Verfahren ist es möglich, ein Produkt zu erhalben, das einen Degustierquotient von 8,8 bis 9,9 Punkte (nach einem 10-Punkten-System) aufweist was unter den organoleptischen Kenndaten liegt, die für den Schaumwein charakteristisch sind, der nach klassischer Flaschen-Technologie hergestellt wird.

Bei der Herstellung von hellrotem Schaumwein wird außerdem zur Zeit das periodische Tank-Verfahren angewendet (siehe- teknologischeskie instruktsii po proizvodstvu i kontrolju kachestva igristykh vin "Technologische Instruktionen für die Herstellung und Qualitätskonktrolle von Schaumwein", 1971). Der Verschnitt für den hellroten Schaumwein wird aus hellroten Weinmaterialien oder mittels Vermischen von roten und weisen Weinmaterialien zubereitet. Es werden in denselben Likör und Hefe eingeführt, dann setzt man dieses Gemisch der Champagnisierung aus. Der hergestellte hellrote Schaumwein wird abgekühlt, notwendigenfalls mit Versandlikör vermischt, gefiltert und in Flaschen abgefüllt.

Bei der Anwendung dieses Verfahrens ist es praktisch unmöglich, ein Fertigprodukt herzustellen, das nach seinen organoleptischen Kenndaten sowie nach dem Farbton und anderen physikalisch-chemischen Kennziffern dem Standard entspricht. Das erfolgt dadurch, daß sich während der Champagnisierung der Verschnitte der hellroten Weinmaterialien ihre Farbe verändert, die Intensität des spezifischen Aromas und Geschmacks, die für die hellroten und roten Weinmaterialien charakteristisch ist, sinkt. Dabei unterscheidet sich jede Partie des Fertigweins nach den obenaufgezählten Kenndaten.

- 3 -

Offenbarung der Erfindung

Der vorliegenden Erfindung liegt die Aufgabe zugrunde, durch Erhöhung der biosynthetischen Funktionen von Hefe ein Verfahren zur Herstellung von Schaumwein mit verbesserter Qualität, unterschiedlich nach Geschmack, Aroma und Farbton zu entwickeln.

Diese Aufgabe wird dadurch gelöst, daß man im Verfahren zur Herstellung von Schaumwein in einem kontinuierlichen Strom, das die Entgasung des Verschnitts aus weißen Weinmaterialien in Gegenwart von Hefe, die an einem Sorptionsmittel immobilisiert sind, die Zuführung des Verschnitts roter Weinmaterialien beziehungsweise der entgasten weißen Weinmaterialien, des Likörs und der Hefe der Champagnisierungszone die eine Schicht aus Sorptionsmittel enthält, für die Durchführung der sekundären Gärung, die Anreicherung des zu champagnisierenden Weins mit Produkten der Autolyse von Hefe, die an dem Sorptionsmittel immobilisert sind, die Kühlung, die Filtration und Abfüllung vorsieht, erfindungsgemäß, in der Champagnisierungszone die Adaptation der Hefe an die Bedingungen der Champagnisierung durchführt, indem der Kontakt der Hefe mit dem zu champagnisierenden Wein ausgeschlossen wird, wobei man vor Beendigung der Adaptation die Hefe mit einem Teil von Likör vermischt, wonach man das Gemisch der adaptierten Hefe mit dem Likör unter die Schicht des Sorptionsmittels einführt, unter dieselbe Schicht führt man auch den Verschnitt der weißen beziehungsweise roten Weinmaterialien und den anderen Likörteil zur Durchführung der sekundären Gärung und anschließenden Anreicherung des zu champagnisierenden Weins mit Produkten der Autolyse der Hefe ein.

Auf Grund der vorliegenden Erfindung wurde es möglich, die Qualität des Fertigproduktes (von 9,3 bis 9,5 Punkten nach dem 10-Punkten-System) infolge der Verlängerung der Anreicherungsdauer von Wein mit biologisch aktiven Stoffen der Hefe unter Beibehaltung

der unveränderten Gesamtdauer des Champagnisierungsvorganges zu verbessern.

Dabei werden hohe organoleptische Kennziffern erreicht, die für Sekt und Schaumwein, die nach der klassischen Flaschen-Technologie hergestellt werden, charakteristisch.

Erfindungsgemäß, ist es zweckmäßig, Hefe mit Likör zu vermischen, der in einer Menge genommen wird, die eine Zuckerkonzentration in den adaptierten Hefe gewährleistet, die der Zuckerkonzentration in dem zu champagnisierenden Wein gleich ist, der sich unter der Schicht des Sorptionsmittels befindet.

Durch die Erfüllung dieser Bedingung ist es möglich, den Prozeß der sekundären Gärung zu intensivieren und seine Dauer zu reduzieren.

Erfindungsgemäß, ist es zweckmäßig, für die Herstellung von hellrotem Schaumwein mit unterschiedlicher Farbintensität den Verschnitt der roten Weinmaterialien und die entgasten weißen Weinmaterialien getrennt der Champagnisierung auszusetzen und den roten und den weißen champagnisierten Wein in einem Verhältnis zu vermischen, das die konstanten organoleptischen und pysikalisch- chemischen Kenndaten des hellroten Schaumweins bewirkt.

Kurzbeschreibung der Zeichnung

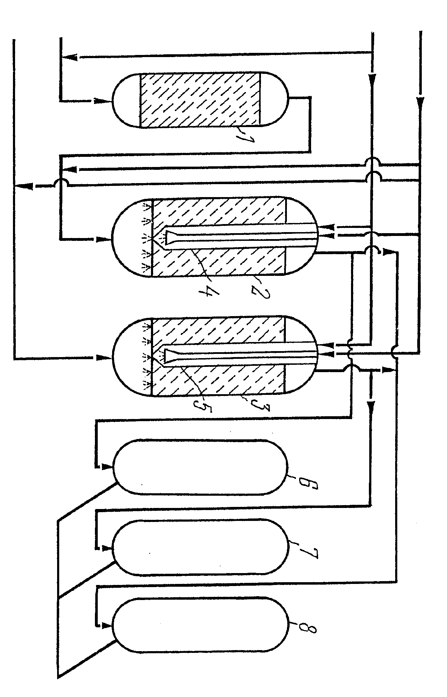

Fig. 1 zeigt ein Fließschema für die Herstellung von Schaumwein in einem kontinuierlichen Strom, erfindungsgemäß.

Weitere Ziele und Vorteile der angemeldeten Erfindung werden aus der nachstehenden ausführlichen Besch- reibung des Verfahrens zur Herstellung von Schaumwein und aus den Ausführungsbeispielen dieses Verfahrens ersichtlich.

Beste Ausführungsform der Erfindung

Bei der Herstellung von Schaumwein in einem kontinuierlichen Strom als Ausgangskomponenten verwendet man weiße und rote Weinmaterialien, Likör und Hefe.

Hefe werden in zwei Teile geteilt. Bei der Verwendung

der weißen Weinmaterialien ist es notwendig, diese der Entgasung vor der Champagnisierung auszusetzen. Hierfür wird der Verschnitt der weißen Weinmaterialien mit einem Teil der Hefe vermischt. Die hergestellten Mischung wird in Form eines kontinuierlichen Stromes der Entgasungszone, die mit einem Sorptionsmittel ausgefüllt ist, zugeführt. In dieser Entgasungszone bei einer Temperatur von von 10 bis 12°C erfolgt der Verbrauch von Sauerstoff des Verschnitts durch Hefe, die an dem Sorptionsmittel immobilisiert sind.

Das Sorptionsmittel stellt zylindrische beziehungsweise ringförmige Elemente dar, die aus Holz, Polyäthylen und Keramik ausgeführt sind.

Bei der Berührung des Verschnitts der weißen Weinmaterialien mit Hefe, die sich am Sorptionsmittel befestigt haben, erfolgt der Verbrauch des in den Weinmaterialien aufgelösten Sauerstoffs durch Hefe. Dabei erfolgt gleichzeitig die Anreicherung des Verschnitts mit biologisch aktiven Stoffen der Hefe und die Verbesserung seiner Qualität.

Die dadurch entgasten weißen Weinmaterialien oder roten Weinmaterialien vermischt man mit Likör und führt man in Form eines kontinuierlichen Stromes der Champagnisierungszone, die eine Schicht aus Sorptionsmittel enthält, wie oben beschrieben zu.

Dabei wird der andere Teil der Hefe, die eine Gärungsaktivität, beispielsweise, von 8 bis 10 $\mu$l.ml/mio·h aufweisen, in Form eines kontinuierlichen Stromes der Adaptation zugeleitet, die in der Zone der Champagnisierung erfolgt. Während der Adaptation wird die unmittelbare Berührung der Hefe mit dem zu champagnisierenden Wein ausgeschlossen. Vor Beendigung der genannten Adaptatin werden die Hefe mit dem anderen Teil des Likörs vermischt. Die zur Adaptation eingetroffenen Hefe verändern allmählich unter Einwirkung der während der Champagnisierung von Wein geschaffenen Bedingungen ihre physiologische Aktivität und stellen ihren Typ der Lebenstätigkeit vom aeroben auf den anaeroben um. Die durchgeführten experimentellen Untersuchungen haben ergeben, daß die spezifische Aktivität der Hefegärung nach der Beendigung der Adaptation beispielsweise von 15,0 bis 20,0 $\mu$l.ml/Mio·h beträgt, was auf das 1,8fache bis 2,0fache die spezifische Aktivität der Hefegärung übersteigt, die keiner Adaptation ausgesetzt wurden.

In Übereinstimmung mit der angemeldeten Erfindung werden die adaptierbaren Hefe mit Likör vermischt, der in einer Menge genommen wird, die eine Zuckerkonzentration in den adaptierten Hefe gewährleistet, die der Zuckerkonzentration in dem champagnisierbaren Wein gleich ist, der sich unter der Schicht des Sorptionsmittel befindet.

Die sich an die Bedingungen der Champagnisierung adaptierten und mit Likör vermischten Hefe treten in einem kontinuierlichen Strom aus der Adaptationszone unter die Schicht des Sorptionsmittel ein, die in der Zone der Champagnisierung von Wein liegt. Unter dieselbe Schicht des Sorptionsmittels führt man ein Gemisch von Verschnitt aus weißen oder roten Weinmaterialien mit Likör in einem kontinuierlichen Strom ein. In der unter der Schicht des Sorptionsmittels liegenden Zone der Champagnisierung kommt es zur sekundären Gärung unter Beteiligung der adaptierten Hefe bei einer Temperatur von 10 bis 12°C und bei einem Druch von 500 bis 600 kPa. Dann gerät der Weinstrom zusammen mit Hefe auf die Schicht des Sorptionsmittels, in der die vollständige Nachgärung des Zuckers sowie die Anreicherung des Weins mit biologisch aktiven Stoffen der Hefe (Vitaminen, Fermenten, Peptiden und Aminosäuren) erfolgt und die Reduktionsprozesse intensiviert werden.

Es werden, erfindungsgemäß, für die Champagnisierung von Wein Hefe verwendet, die sich an die Bedingungen der Champagnisierung adaptiert haben, wie dies in der klassischen Flaschentechnologie der Herstellung von Schaumwein zustandekommt. Infolge der erreichten allmählichen simultanen Änderung der physiologischen Aktivität der Hefe und der biochemischen Prozesse in dem zu champagnisierenden Wein wurde es möglich, Schaumwein hoher Qualität herzustellen (von 9,3 bis 9,5 Punkte nach dem 10-Punkten-System).

Der aus der Zone der Champagnisierung eintretende Wein wird abgekühlt, notwendigenfalls mit Speditionslikör dosiert, gefiltert und der Abfüllung zugeleitet.

Erfindungsgemäß, werden bei der Herstellung von hellrotem Schaumwein und sowie von rotem und weißem Schaumwein, die in einem Strom erfolgt, zwei Zonen der Champagnisierung in das Fließschema eingeschaltet. In einer Zone der Champagnisierung erhält man weißen Schaumwein aus weißen Weinmaterialien und in der zweiten Zone der Champagnisierung erhält man roten Schaumwein aus roten Weinmaterialien. Durch das Variieren des Verhältnisses des weißen Weins zum roten Wein erhält man hellroten Schaumwein mit erwünschtem Farbton und Geschmack.

Hierdurch ermöglicht es das erfindungsgemäße Verfahren, Schaumweine sämtlicher Marken vom "Brüt" bis zu Dessertweinen sowie ihre unterschiedlichen Arten: Weiß-, Rot- und hellroter Wein.

Zur besseren Erläuterung dieser Erfindung werden nachstehende Beispiele für ihre konkrete Realisierung angeführt.

Beispiel 1

In einen Verschnitt von weißen Weinmaterialien führt man einen Teil, bezogen auf die Gesamtmenge, der Hefe ein, berechnet auf 2- bis 3 Mio Zellen/ml. Die hergestellte Mischung wird in Form eines kontinuierlichen Stromes in einen Apparat 1 zur Entgasung der weißen Weinmaterialien geleitet.

Die entgasten weißen Weinmaterialien vermischt man mit 35%, bezogen auf die Gesamtmenge, Likörs und führt man in Form eines kontinuierlichen Stromes einem Apparat 2 zur Champagnisierung und weiteren Herstellung von

- 8 -

weißem Schaumwein zu.

Rote Weinmaterialien werden mit 35%, bezogen auf die Gesamtmenge, Likörs vermischt und in Form eines kontinuierlichen Stromes in einen Apparat 3 zur Champagnisierung und weiteren Herstellung von rotem Schaumwein geleitet. Dabei werden der zweite und der dritte Teil der Hefe in Form kontinuierlicher Ströme den Apparaten 2 und 3 beziehungsweise den Zonen 4 und 5 der Adaptation zugeführt, in denen die Hefe in 5 Tagen ihre physiologische Aktivität verändern. Die Erhöhung der Gärungsaktivität der Hefe bis auf 18,0 $\mu$l.ml/MiO.h erfolgt durch die Einführung von Likör in einer Menge von 15%, bezogen auf die Gesamtmenge von demselben, in den unteren Teil der Zone der Adaptation 4 und 5  3 Stunden vor der Beendigung der Adaptation  von Likör.

Die sich an die Bedingungen der Champagnisierung adaptierten Hefe und mit dem Likör vermischten Hefe treten in einem kontinuierlichen Strom aus den Zonen der Adaptation 4 und 5 unter die Schichten des Sorptionsmittels in die Apparate 1 und 2 zur Champagnisierung ein.

Unter die gleichen Schichten des Sorptionsmittels, wie oben erwähnt, führt man ein Gemisch des Verschnitts der weißen Weinmaterialien mit Likör und einem Gemisch aus roten Weinmaterialien mit Likör in kontinuierlichen Strömen ein, in denen die sekunäre Gärung beginnt.

In den Apparatn 1 und 2 in den Zonen der Champagnisierung erfolgt die vollständige Nächgärung des Zuckers sowie die Anreicherung des hergestellten Weiß und Rotweins mit biologisch aktiven Stoffen.

Nach der Champagnisierung wird jeder der beiden Weinströme, die aus den Apparaten 2 und 3 eintreten, in zwei Teile in einem Verhältnis 1:1 getrennt. Ein Teil des Weins, der aus dem Apparat 2 eintritt , und ein Teil des Weins, der aus dem Apparat 3 eintritt, leitet man den Aufnahmebehältern 6 und 7, für den weißen bzw.beziehungsweise für den roten Schaumwein zu. Die übriggebliebenen Teile der Ströme des hergestellten champagnisierten Weiß- und Rotweins, die aus den Apparaten 2 und 3 eintreten, werden in einen Aufnahmebehälter 8 für die Herstellung von hellrotem Schaumwein geleitet. Durch das Variieren des Verhältnisses dieser übriggebliebenen Stromteile des weißen und des roten Schaumweins erhält man den hellroten Schaumwein, der eine Färbungsintensität von 0,3 bedingten Einheiten, die kalorimetrisch ermittelt werden, und einen Degustierquotient von 9,4 Punkte gemäß einem 10-Punkten-System aufweist. Der Wein aus den Aufnahmebehältern 6,7 und 8 kühlt man, mit Versandlikör dosiert, filtert und der Abfüllung zuleitet.

Beispiel 2

In einen Verschnitt weißer Weinmaterialien führt man Hefe ein, berechnet 2 bis 3 Mio Zellen/ml, und leitet man dem Apparat 1 zur Entgasung zu, dann werden in den Strom des entgasten Verschnitts 35%, bezogen auf den Gesamtstrom, des Tanklikörs eingeführt und in einen Apparat 2 zur Champagnisierung geleitet. Der zweite Strom der Hefe leitet man der Zone der Adaptation 4 zu, in der die Hefe ihre physiologische Aktivität in 5 Tagen ändern. Die Erhöhung der Gärungsaktivität der Hefe bis auf 18,0 $\mu$l.ml/Mio·h erfolgt durch die Einführung des Tanklikörs in einer Menge von 15%, bezogen auf die gesamte Likörmenge, in den unteren Teil der Adaptationszone 4 3 Stunden vor der Beendigung der Adaptation. Die adaptierten Hefe treten in den Apparat 2 unter die Schicht des Sorptionsmittels ein, in der die sekundäre Gärung vor sich geht. Dann fließt der champagnisierte Wein durch die Sorptionsschicht durch, in der er mit den Autolyseprodukten der Hefe angereichert wird, die am Sorptionmmittel haftenbleiben.

In den Verschnitt der roten Weinmaterialien führt man 35%, bezogen auf die Gesamtmenge, des Tanklikörs ein und leitet man in den Apparat 3 zur Champagnisierung. Der Zone der Adaptation 5 leitet man den dritten Strom der Hefe zu, in diesem werden die Hefe in 5 Tagen auf die Bedingungen der Champagnisierung vorbereitet. Drei Stunden vor der Zuführung der adaptierten Hefe der Champagnisierung leitet man der Zone der Adaptation 5 Tanklikör in einer Menge von 15%, bezogen auf seine Gesamtmenge, zu. Dann treten die Hefe in die untere Zone des Apparates 3 unter die Sorptionsschicht ein, in der die sekundare Gärung vor sich geht. Am Sorptionsmittel befestigen sich die in die Zone der Champagnisierung eingetretenen Hefezellen, es kommt zur Nachgärung und zur Anreicherung des roten Schaumweins mit biologisch aktiven Stoffen zustande.

Der aus der oberen Zone des Apparates 2 eintretende champagnisierte Weißwein führt man dem Aufnahmebehälter 6 zu, kühlt man, mit Versandlikör dosiert, filtert und zur Abfüllung leitet.

Der aus der oberen Zone des Apparates eintretende champagnisierte Rotwein führt man dem Aufnahmebehälter 7, kühlt man, mit Versandlikör dosiert, filtert und leitet zur Abfüllung. Der hergestellte weiße und rote Schaumwein weist einen Degustierquotient von 9,5 Punkten/nach einem 10-Punkten System/auf.

Beispiel 3

Das Verfahren erfolgt unter den in Beispiel 1 beschriebenen ähnlichen Bedingungen, man führt aber in den Strom des entgasten Verschnitts aus weißen Weinmaterialien und in den Strom der roten Weinmaterialien je 40%, bezogen auf die Gesamtmenge, Tanklikörs ein und in die Zone der Adaptation 4 und 5 je 10%, bezogen auf die Gesamtlikörmenge, ein. Die Zuführung des Likörs in die Zone der Adaptation erfolgt in diesem Fall 5 Stunden vor der Zuführung der Hefe dem champagnisierbaren Wein. Dabei erfolgt die Erhöhung der Gärungsaktivität der Hefe bis auf 15,0 $\mu$l·ml/Mio·h.

Der dem Aufnahmebehälter 8 zuzuleitende rote Schaumwein gewährleistet in dem fertigen hellroten Schaumwein eine Intensität der Färbung von 0,5 bedingten Einheiten, die kalorimetrisch ermittelt wurden, und einen Degustierquotient von 9,5 Punkten (nach einem 10-Punkten-System).

Industrielle Anwendbarkeit

Die erfindungsgemäße Erfindung kann besonders erfolgreich bei der Herstellung von Schaumwein in kontinuierlichen Tank-Verfahren eingesetzt werden.

- 12 -.

PATENTANSPRUCH

1. Verfahren zur Herstellung von Schaumwein in einem kontinuierlichen Strom, das die Entgasung des Verschnitts weißer Weinmaterialien in Gegenwart von Hefen, die an einem Sorptionsmittel immobilisiert sind, die Zuführung des Verschnitts der roten Weinmaterialien oder entgasten weißen Weinmaterialien, des Likörs und der Hefe der Zone der Champagnisierung, die eine Schicht aus einem Sorptionsmittel für die Durchführung der sekundären Gärung aufweist, die Anreicherung des champagnisierbaren Weins mit Produkten der Autolyse der Hefe, die am Sorptionsmittel immobilisiert sind, die Kühlung, Filterung und Abfüllung vorsieht, d a d u r c h g e k e n n z e i c h n e t , daß man in der Zone der Champagnisierung die Adaptation der Hefe an die Bedingungen der Champagnisierung durchführt, indem man die Berührung der Hefe mit dem champagnisierbaren Wein ausschließt, wobei man vor der Beendigung der Adaptation die Hefe mit einem Teil des Likörs vermischt, wonach man das Gemisch der adaptierten Hefe mit dem Likör unter die Schicht des Sorptionsmittels einführt, unter dieselbe führt man auch den Verschnitt der weißen und roten Weinmaterialien und den anderen Teil des Likörs zwecks Durchführung der sekundären Gärung und anschließenden Anreicherung des champagnisierbaren Weins mit Produkten der Hefeautolyse ein.

2. Verfahren nach Anspruch 1, d a d u r c h g e k e n n z e i c h n e t , daß man die Hefe mit Likör vermischt, der in einer Menge genommen wird, die eine Zuckerkonzentration in den adaptierten Hefen bewirkt, die der Zuckerkonzentration in dem champagnisierbaren Wein gleichkommt, der sich unter der Schicht des Sorptionsmittels befindet.

3. Verfahren nach Anspruch 1, d a d u r c h g e - k e n n z e i c h n e t , daß man zwecks Herstellung des hellroten Schaumweins den Verschnitt der roten Weinmaterialien und der entgasten weißen Weinmaterialien getrennt der Champagnisierung aussetzt und den roten und den weißen champagnisierten Wein in einem Verhältnis vermischt, das konstante organoleptische und physikalisch-chemische Kenndaten des hellroten Schaumweins bewirkt.

**I. CLASSIFICATION OF SUBJECT MATTER** (if several classification symbols apply, indicate all) [6]

According to international Patent Classification (IPC) or to both National Classification and IPC

IPC[4] - C 12 G 1/06

**II. FIELDS SEARCHED**

| Minimum Documentation Searched [7] | |
|---|---|
| Classification System | Classification Symbols |
| IPC[4] | C 12 G 1/06 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU, A1, 492541 (Vsesojuzny zaochny institut pischevoi promyshlennosti), 23 January 1976 (23.01.76), see column 3, lines 21-28, column 4, lines 1-3, claims | 1 |
| A | SU, A1, 520396 (Vsesojuzny zaochny institut pischevoi promyshlennosti), 25 July 1976 (25.07.76), see column 5, lines 32-35, column 6, lines 1-5 | 1 |
| A | SU, A1, 529209, (Vsesojuzny zaochny institut pischevoi promyshlennosti), 23 December 1976 (23.12.76), see column 3, lines 7-17, claims | 1 |
| A | SU, A1, 582279, (Vsesojuzny zaochny institut pischevoi promyshlennosti), 6 December 1977 (06.12.77), see column 2, lines 11-31, column 3, lines 1-18, claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 13 January 1988 (13.01.88) | 24 February 1988 (24.02.88) |
| International Searching Authority | Signature of Authorized Officer |
| ISA/SU | |